# EUROPEAN PATENT APPLICATION

(11) **EP 4 246 265 A1**
(43) Date of publication of application: **20.09.2023**
(21) Application number: 23161929.7
(22) Date of filing: 14.03.2023
(51) Int. Cl.: G05B 23/02, G05B 19/418

(54) **SYSTEM AND METHOD FOR PREDICTIVE ANALYTICS FOR FITNESS OF TEST PLAN**

(30) Priority: 16.03.2022 US 202217696689
(71) Applicant: Claritrics Inc d.b.a Buddi AI, New York, NY 10036 (US)
(72) Inventor: SHARAFATH, Mohammed, 612602 Kumbakonam (IN); KRISHNAMOORTHY, Harinath, 600101 Chennai (IN); SANTHIAPPAN, Sudarsun, 600077 Chennai (IN)
(74) Representative: Savi, Massimiliano

(57) **Abstract**

The present disclosure describes a method, apparatus, and computer readable medium for providing predictive and preventive analysis relating to fitness of elements in an assembly line, prior to final product assembling. According to the present disclosure, when the elements in assembly lines pass the testing performed by the element testing units, the test data of the elements is processed by the system to predict whether the elements when assembled, results in a fit product. When the final product is predicted to be unfit, the system detects non-reliable element(s) and provide explanation/feedback for the failure of the final product.

## Description

### TECHNICAL FIELD

The present disclosure relates to the field of product yield prediction using a machine learning (ML) algorithm. Particularly, the present disclosure relates to a system and a method for providing predictive and preventive analysis relating to fitness of elements in an assembly line, prior to final product assembling.

### BACKGROUND

In manufacturing production line, manufacturing a product involves setup of multiple assembly lines. Different elements/components may be manufactured by different assembly lines which are later assembled to develop the final product. At each stage, the produced elements are tested and verified. In modern times, manufacturing has become more complicated, and most processes in use today are infinitesimal when using nanometer-scale technology. During manufacturing, product fabrication is followed by the final assembly as a packaged product. In between, the products in terms of their functional parameters are tested on a specialized tester machine. The products that fail in the tester machine are filtered out. However, some faulty products pass the test and cause the final assembly to fail and causes a humongous wastage of manufacturing effort and time. The assembly defects represent a significant proportion of quality defects in many companies.

Thus, there is need of techniques to predict the fitness of the products in the final assembly and to provide suggestion for test plan modification by employing process design changes.

The information disclosed in this background section is only for enhancement of understanding of the general background of the invention and should not be taken as an acknowledgement or any form of suggestion that this information forms the prior art already known to a person skilled in the art.

### SUMMARY

One or more shortcomings discussed above are overcome, and additional advantages are provided by the present disclosure. Additional features and advantages are realized through the techniques of the present disclosure. Other embodiments and aspects of the disclosure are described in detail herein and are considered a part of the disclosure.

An object of the present disclosure is to identify non-reliable products well before final assembly to provide considerable savings in terms of manufacturing cost and time.

Another objective of the present disclosure is to predict fitness of elements in an assembly line, prior to final product assembling.

Another object of the present disclosure is providing suggestions to modify already existing test plan(s) to assure the steady final product yield.

The above stated objects as well as other objects, features, and advantages of the present disclosure will become clear to those skilled in the art upon review of the following description, the attached drawings, and the appended claims.

According to an aspect of the present disclosure, methods, apparatus, and computer readable media are provided for predictive and preventive analysis relating to fitness of elements in an assembly line, prior to final product assembling.

In a non-limiting embodiment of the present disclosure, the present application discloses method for providing predictive and preventive analysis relating to fitness of elements in an assembly line, prior to final product assembling. The method may comprise obtaining from one or more element testing units test data of one or more elements, in the assembly line, wherein the test data corresponds to electrical parameters representing functionality of the one or more elements under different test conditions. The method may further comprise processing the obtained test data of each element with pre-trained test data to predict whether said one or more elements, when assembled, results in a fit product, wherein said processing includes comparing the obtained test data of each of the one or more elements with a pre-defined threshold value, stored in a database. The method may further comprise in response to predicting that said one or more elements, when assembled, results in the fit product, assembling said one or more elements to develop the final product. The method may further comprise in response to predicting that said one or more elements, when assembled, results in an unfit product, determining at least one element that results to the unfit product. The method may further comprise providing feedback to the one or more element testing units to allow them to modify testing plans for said at least one element that results in the unfit product.

In another non-limiting embodiment of the present disclosure, the present application discloses an apparatus to provide predictive and preventive analysis relating to fitness of elements in an assembly line, prior to final product assembling. The apparatus may comprise a processing unit configured to obtain from one or more element testing units test data of one or more elements, in the assembly line, wherein the test data corresponds to electrical parameters representing functionality of the one or more elements under different test conditions. The system further comprises a memory unit operationally coupled with the processing unit and to store the obtained test data. The system further comprises a prediction unit operationally coupled with the processing unit and the memory unit, and the prediction unit is configured to process the obtained test data of each element with pre-trained test data to predict whether said one or more elements, when assembled, results in a fit product, wherein said processing includes comparing the obtained test data of each of the one or more elements with a pre-defined threshold value, stored in a database. In response to predicting that said one or more elements, when assembled, results in the fit product, the processing unit is configured to assemble said one or more elements to develop the final product. The system further comprises a feedback unit operationally coupled with the processing unit, the prediction unit, and the memory unit. The feedback unit is configured to: in response to predicting that said one or more elements, when assembled, results in an unfit product, determine at least one element that results to the unfit product; and provide feedback to the one or more element testing units to allow them to modify testing plans for said at least one element that results in the unfit product.

In another non-limiting embodiment of the present disclosure, the present application discloses a non-transitory computer readable media storing one or more instructions executable by at least one processor. The non-transitory computer readable media comprises one or more instructions for obtaining from one or more element testing units test data of one or more elements, in the assembly line, wherein the test data corresponds to electrical parameters representing functionality of the one or more elements under different test conditions. The non-transitory computer readable media further comprises one or more instructions for processing the obtained test data of each element with pre-trained test data to predict whether said one or more elements, when assembled, results in a fit product, wherein said processing includes comparing the obtained test data of each of the one or more elements with a pre-defined threshold value, stored in a database. The non-transitory computer readable media further comprises one or more instructions for assembling said one or more elements to develop the final product, in response to predicting that said one or more elements, when assembled, results in the fit product. The non-transitory computer readable media further comprises one or more instructions for determining at least one element that results to the unfit product, in response to predicting that said one or more elements, when assembled, results in an unfit product. The non-transitory computer readable media further comprises one or more instructions for providing feedback to the one or more element testing units to allow them to modify testing plans for said at least one element that results in the unfit product.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF DRAWINGS

Further aspects and advantages of the present disclosure will be readily understood from the following detailed description with reference to the accompanying drawings. Reference numerals have been used to refer to identical or functionally similar elements. The figures together with a detailed description below, are incorporated in and form part of the specification, and serve to further illustrate the embodiments and explain various principles and advantages, in accordance with the present disclosure wherein:
**Figure 1** shows a conventional product assembly workflow 100.
**Figure 2** shows a product assembly workflow **200,** in accordance with some embodiments of the present disclosure.
**Figure 3** shows a block diagram of a system to provide predictive and preventive analysis relating to fitness of elements in an assembly line prior to final product assembling, in accordance with some embodiments of the present disclosure.
**Figure 4** shows an exemplary decision tree-based structure, in accordance with some embodiments of the present disclosure.
**Figure 5** shows workflow of prediction & explain ability model, in accordance with some embodiments of the present disclosure.
**Figure 6** shows an example of working of the system for providing predictive and preventive analysis relating to fitness of elements in an assembly line, prior to final product assembling, in accordance with some embodiments of the present disclosure.
**Figure 7** shows a block diagram of the system for providing predictive and preventive analysis relating to fitness of elements in an assembly line, prior to final product assembling, in accordance with some embodiments of the present disclosure.
**Figure 8** shows a flowchart illustrating a method for providing predictive and preventive analysis relating to fitness of elements in an assembly line prior to final product assembling, in accordance with some embodiments of the present disclosure.

It should be appreciated by those skilled in the art that any block diagrams herein represent conceptual views of the illustrative systems embodying the principles of the present disclosure. Similarly, it will be appreciated that any flowcharts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present disclosure described herein as "exemplary" is not necessarily to be construed as preferred or advantageous over other embodiments.

While the disclosure is susceptible to various modifications and alternative forms, specific embodiments thereof have been shown by way of example in the drawings and will be described in detail below. It should be understood, however, that it is not intended to limit the disclosure to the particular form disclosed, but on the contrary, the disclosure is to cover all modifications, equivalents, and alternatives falling within the spirit and the scope of the disclosure.

The terms "comprise(s)", "comprising", "include(s)", or any other variations thereof, are intended to cover a non-exclusive inclusion, such that a setup, device, apparatus, system, or method that comprises a list of components or steps does not include only those components or steps but may include other components or steps not expressly listed or inherent to such setup or device or apparatus or system or method. In other words, one or more elements in a device or system or apparatus proceeded by "comprises... a" does not, without more constraints, preclude the existence of other elements or additional elements in the system.

In the following detailed description of the embodiments of the disclosure, reference is made to the accompanying drawings that form a part hereof, and in which are shown by way of illustration of specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense. In the following description, well known functions or constructions are not described in detail since they would obscure the description with unnecessary detail.

The terms like "at least one" and "one or more" may be used interchangeably throughout the description. The terms like "a plurality of" and "multiple" may be used interchangeably throughout the description. Further, the terms like "elements" and "components" may be used interchangeably throughout the description. The terms like "product", and "final product" may be used interchangeably throughout the description.

In the present disclosure, the term "elements" is used within the context of its broadest definition. An element may be any electronic, electric and/or electromagnetic component which may be assembled to manufacture a product such as integrated circuit (IC), electronic device, etc.

In the present disclosure, the term "product" is used within the context of its broadest definition. The product may be any electronic, electric or electromagnetic device or any IC, but not limited thereto. The product is manufactured using one or more elements defined above.

There has been significant research in product yield prediction on a machine learning (ML) algorithms approach. The significant advantage of ML algorithms is to discover formerly unknown (implicit) knowledge and to identify relationships in datasets. The overall ability of the ML algorithm to achieve results in a manufacturing environment was successfully proven. The ML has been successfully utilized in various process optimization, monitoring, and control applications in manufacturing. Most of these approaches focused on predicting the fabrication yields. Often, ML applications are found to be limited, focusing on specific processes instead of the whole manufacturing program or manufacturing system.

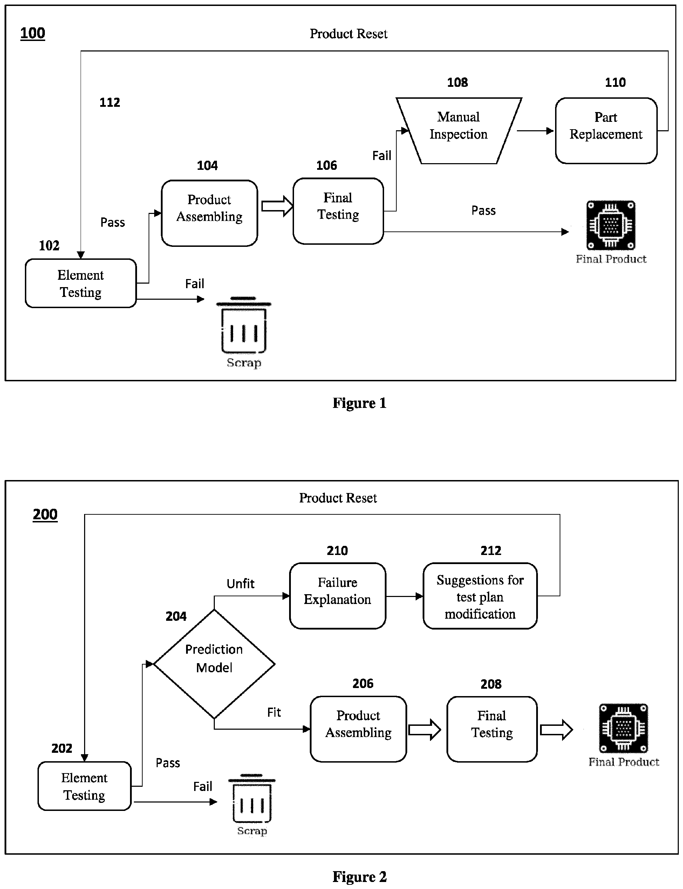

In conventional product manufacturing assembly, as shown in fig. 1, elements in an assembly line are tested using one or more element testing units shown at block 102. The elements which pass the test are sent to final product assembly, at block 104, for manufacturing the product using the elements, and the elements which fails in the test are discarded. After final product assembly, the manufactured product is sent to final testing at block **106.** The product which fails the final testing are separated and sent for manual inspection at block **108** and after manual inspection the product is sent for replacement of one or more elements at block **110,** which may be faulty and leads to failure of the product. However, such conventional product assembly workflow causes the final assembly to fail and causes a humongous wastage of manufacturing effort and time.

The above-mentioned problems are solved by the present disclosure. The present disclosure defines system and method which can determine fitness of the test plan of elements in a manufacturing production line, determine the completeness of the product's functional parameter tests, and warn field engineers about non-reliable products in the Manufacturing production line. The system can also predict non-reliable elements well before final assembly providing considerable savings in terms of manufacturing cost and time. This also provides explain ability and confidence scores for the non-reliable elements for the final assembly. The system also provides opportunity to validate the already existing test plan to assure the steady final product yield. The ability to predict the final product yield performance on semi-finished material in the manufacturing pipeline gives reliable information for engineers to investigate possible contributing factors in the upstream process steps for remedial actions.

The proposed system uses supervised learning algorithm to provide predictive and preventive analysis relating to fitness of elements in an assembly line prior to final product assembling. The system is trained using large volume of training samples with both fit and unfit elements test data, and various auxiliary data to build an ensemble model, which is used as a prediction model to provide the fitness of elements in the final assembly. The system also employees a parallel tree-based model for failure explain ability, and suggestions for test plan changes concerning the unfit products to enable the engineers/operators to update their existing test plan. With the proposed system, it is highly possible to achieve near-zero defects in the final product assembly over a period.

Fig. 2 shows as a product assembly workflow according to an embodiment of the present disclosure. According to Fig. 2, elements are tested using one or more elements testing units at block **202.** The elements which fail the testing are discarded and the elements which passes the testing are further analyzed at block **204** by a prediction model of the proposed system which predicts whether the elements would result in a fit product or unfit product. In an embodiment, if the prediction model predicts that the elements would result in the fit product, the elements are passed to product assembly at block **206** for manufacturing the final product. Thereafter, the final product is sent to final testing at block **208.** In another embodiment, if the prediction model predicts that the elements would result in the unfit product, the test data of the element are processed at block **210** by the system to provide the product failure explanations, and thereafter at block **212,** feedback for the failure of said elements is provided to the testing units at block **202** to make modifications in the test plans.

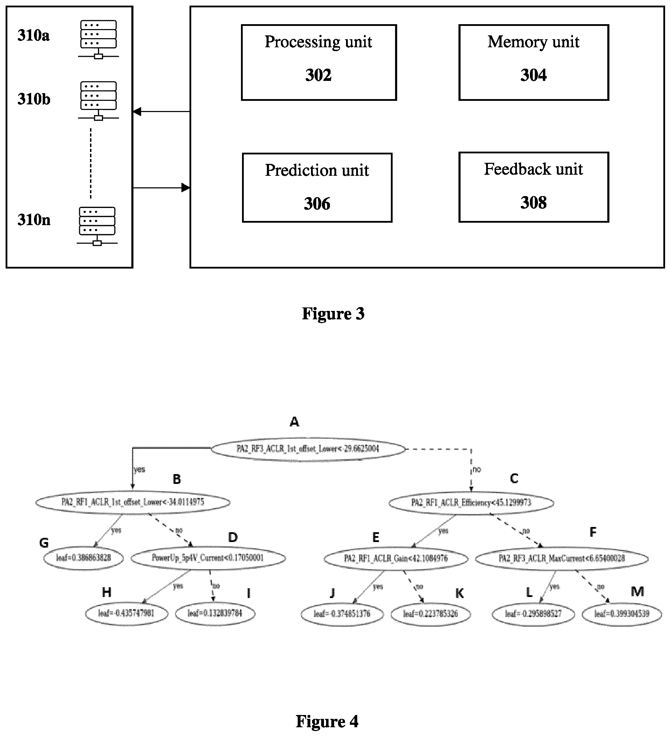

The product assembly workflow is explained in more detail using the system illustrated in fig. 3. Fig. 3 illustrates by way of a block diagram a system **300** for providing predictive and preventive analysis relating to fitness of elements in an assembly line, prior to final product assembling, according to an embodiment of the present disclosure. The system **300** comprises a processing unit **302,** a memory unit **304,** a prediction unit **306,** and feedback unit **308.** The processing unit **302** may comprise one or more processor. The processing unit **302,** the memory unit **304,** the prediction unit **306** and the feedback unit **308** are communicatively coupled to each other via wired or wireless communication. In an embodiment, although one or more element testing units **310** are shown to be outside the system **300,** but these one or more element testing units **310** may be part of the system **300.**

According to an embodiment, the processing unit **302** may obtain test data of one or more elements in the assembly line from one or more element testing units 310. The test data corresponds to electrical/electromagnetic parameters representing functionality of the one or more elements under different test conditions. Exemplary test data is shown below in table 1.

**Table 1: Test Parameter Data**

| Efficiency | Temperature | Frequency | Channel Power |
|---|---|---|---|
| 42.086 | 42.5 | 2175 | 49.004 |
| 42.503 | 43.625 | 2175 | 49.011 |
| 41.592 | 43.625 | 2175 | 48.986 |
| 42.85 | 43.438 | 2175 | 49.002 |
| 41.31 | 42.25 | 2175 | 48.993 |
| 43.415 | 42.5 | 2175 | 48.988 |
| 41.509 | 41.75 | 2175 | 49.002 |

The obtained test data is stored in the memory unit **304** for further processing by the system. The prediction unit **306** process the test data of each element with pre-trained test data to predict whether said one or more elements, when assembled would result in a fit product. The prediction unit **306** processes the test data by comparing the test data of each of the one or more elements with a pre-defined threshold value stored in a database in the memory unit **304.**

According to an embodiment, the prediction unit **306** comprises a prediction model generated using machine learning algorithms trained on large volume of historical test data that comprises fit, unfit elements test data, and various auxiliary data retrieved from one or more element test units and product test units of different assembly line, over a period of time. During the model training, based on the patterns present in test data i.e., parameter value which leads to pass/failure of final product, the model aligns the threshold value in such a way that it performs well on the training data fed to the model. An optimization technique is used to optimize the alignment of the threshold value internally to better perform the prediction. Once the training is complemented, the trained system can predict the fitness of any product based on new un-seen test data using the calculated threshold.

Coming back to figure 3, when the prediction unit **306** predicts that said one or more elements, when assembled, would result in the fit product, the processing unit **302** may pass the one or more elements to further develop the final product. The final product may be developed, using the elements which are predicted to be fit, by any suitable product assembling unit (not shown in figure 3).

On the contrary, when the prediction unit **306** predicts that said one or more elements, when assembled, would result in an unfit product, the feedback unit **308** determines at least one element that causes the final product to be unfit and provide feedback to modify testing plans for said at least one element responsible for the unfit product. In an essential embodiment, the feedback unit **308** makes use of the prediction model that defines a decision tree-based structure to determine at least one element that causes the final product to be unfit and provide feedback to modify the testing plans in order to improve the testing process.

An exemplary decision tree-based structure is shown in fig. 4. The decision tree defines a tree structure elaborating the electrical parameters for each element, having one root node and a plurality of terminal nodes. Each terminal node is connected to the root node through a decision path and each decision path comprises at least one intermediate node in between the root node and the terminal node. Also, each intermediate node of the decision tree is connected with at least one terminal node via a decision path. Each node of the decision tree represents an electrical parameter and respective threshold value for determining whether the element results to the fit product or the unfit product.

The functioning of the decision tree as shown in fig. 4 may be understood using following example. Starting from root node (A in present case), when the test parameter meets the pre-set threshold criteria associated with the root node, a decision path is traversed "represented by solid line" to reach at the next node (B in present case) of the decision tree which represents another threshold criteria for another test parameter and said process is continued till the decision tree reaches a terminal node (for example, H in present case). In this manner, when the decision tree is reaches the terminal node **H** satisfying the pre-set threshold criteria, said element is considered to be reliable to develop the final product in the assembly line.

On the contrary when the test parameter does not meet the pre-set threshold criteria at the root node **A,** the decision path is traversed "represented by dotted line" to reach the next node (C in the present case) in the decision tree, which represents another threshold criteria for another test parameter and said process is continued till the decision tree reaches a terminal node (for example, M in present case). Accordingly, when the decision tree is reaches the terminal node J by not satisfying the pre-set threshold criteria, said element is considered to be non-reliable to develop the final product in the assembly line.

In this manner, respective test parameter data is analyzed at each node to determine whether the test parameter satisfies the threshold criteria or not, and based on the analysis, the decision tree is traversed from the root node (A) to one of the terminal nodes (G, H, I, J, K, L, M). According to the traversed path, feedback is provided to the modify the test plan.

The feedback unit **308** uses Local Interpretable Model-agnostic Explanations (LIME) module on top of decision tree-based structure. The LIME module determines which parameter(s) changes will have most impact on the prediction of the fitness of the final product. The LIME module is also used to generate a confidence score for the identified problematic elements. In range of (0-1), if the LIME module finds that tweaking a parameter(s) value has significant impact on the prediction, then confidence score will be near to 1 else it will be near to 0. The confidence score helps to take concise decision on the model prediction.

According to an embodiment of the present disclosure, the feedback unit **308** analyses the test data for each element to determine the problematic element and corresponding parameter(s) which leads to failure of final product. In order to determine the responsible problematic parameter(s), the decision path is traversed from the root node to the terminal node of the plurality of terminal nodes based on the test data of the element. Further, it is determined whether the element results to the unfit product based on the threshold value of the nodes of the traversed decision path. While traversing the decision path, when the test data does not satisfy the threshold criteria associated with the last non-terminal node connected to the terminal node of the decision path, inputs are provided as the feedback for test plan modification relevant to the one or more electrical parameters corresponding to all nodes in the traversed decision path.

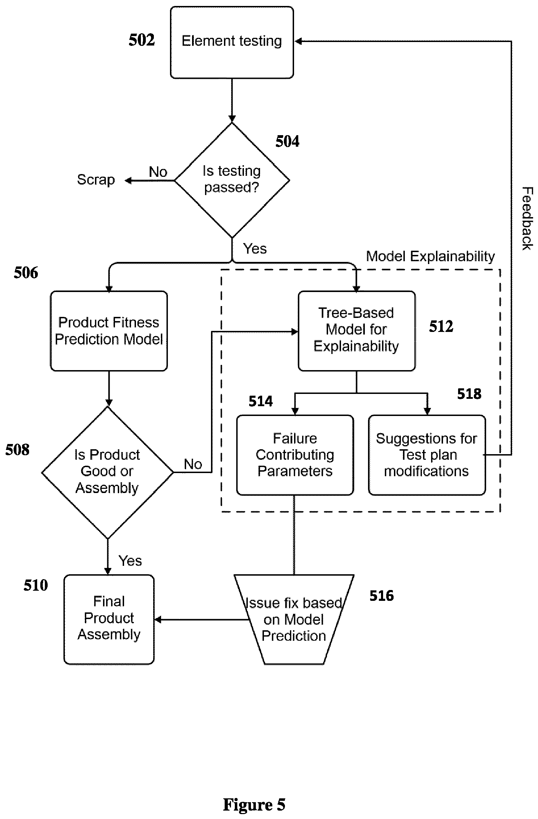

According to an embodiment of the present disclosure, the feedback unit **308** may monitor the responsible test parameters of elements which causes the failure of final product and may provide feedback along with the percentage of total cases where the corresponding parameter led to failure of the final product. The feedback unit **308** may highlight the test parameters which has major contribution in the product failure. Fig. 5 illustrates the above-mentioned parallel tree-based model for failure explain ability, and suggestions for test plan changes concerning the failure products to update the existing test plan.

As can be seen in fig. 5, at block **502,** element testing is performed, and at block **504,** it is determined that whether the element passes the test or not. Upon determination that the element passes the test, the test data is passed to the prediction model at block **506,** to predict the fineness of the product being developed. At block **508,** it is predicted that whether the element when assembled results in a fit product or unfit product. Upon predicting that the element when assembled results in the fit product, the element is sent for assembling to develop the final product at block **510.** However, upon predicting that the element when assembled results in unfit product, the test data of the element is provided tree-based model for determining the responsible parameter for failure at block **512.** At block **514,** the tree-based model may provide information of failure contributing parameters which may be used analyzed to resolve the issues and reduce the failure of the product, at block **516.** Further, at block **518,** feedback may be provided to modify the test plan so that the overall yield of the manufacturing system. With this optimized approach, it is highly possible to achieve near-zero defects in the final product assembly over a period.

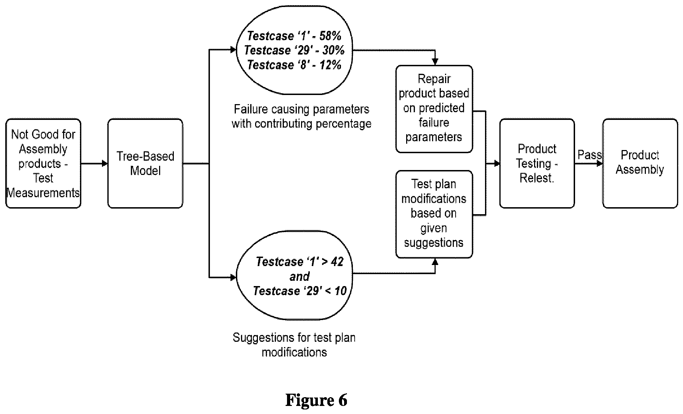

As explained above, the decision tree-based structure of the system **300** provides explain ability for failure parameters of non-reliable products. This is explained through an example as depicted in fig. **6** according to an embodiment of the present disclosure. For example, upon analysis it may be found that the test cases `1' & '29' alone contribute more than 80% for the failure of the product in the assembly. Accordingly, the system may provide relevant suggestions for modifying the corresponding test case's threshold limit. By fixing and updating the test plan as suggested by the system on a regular interval, the minimal defects in the final product assembly can be achieved.

The system disclosed in the present disclosure, when employed to manufacturing companies would provide accurate predictions. Further, the disclosed system is not limited to semiconductor manufacturing, and it can also be extended swiftly to any manufacturing industry that involves final product assembly with numerical data as test measurements.

In this way, the system 300 only needs data from elements functional tests for predicting the final product's failure. The system can predict the final product yield performance on a semi-finished manufacturing pipeline, which gives valuable information for the field engineer to rework/repair the faulty products and prepare for the demanding consecutive process steps. The system provides a contributing percentage and reason (explain ability) for assembly failure causing functional test measurements in the near real-time. Also, the embedded prediction model of the system automatically trains and evaluates itself periodically as and when the new data comes in. Further, the drift in the functional test's measurement data is continuously monitored by the embedded prediction model and the model updates itself with the recent test measurement trend to provide the optimum prediction. The model may dynamically adjust the pre-defined threshold value based on continuously monitored measurement data.

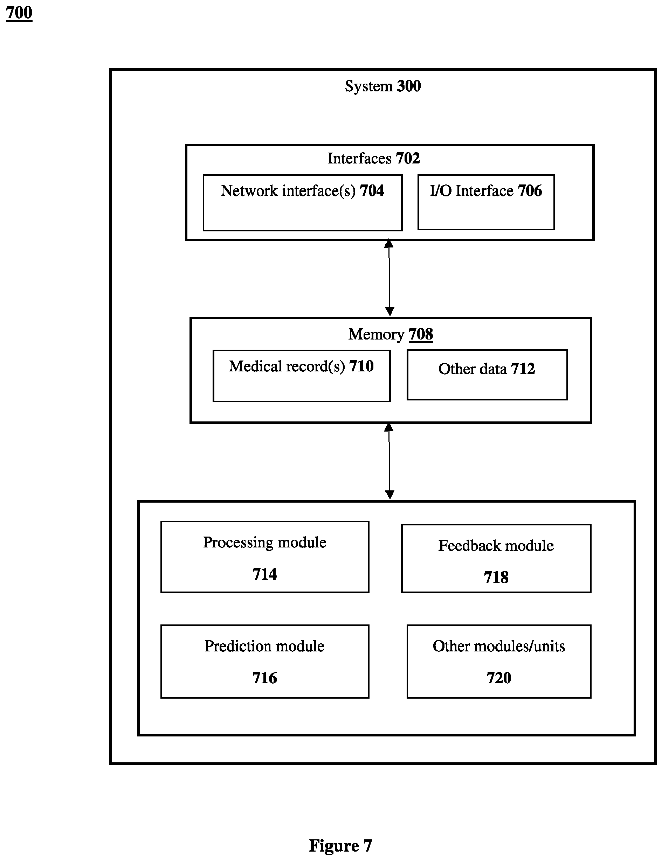

Referring now to **Fig. 7****,** which shows a block diagram of a system **300,** in accordance with some embodiments of the present disclosure. In one non-limiting embodiment of the present disclosure, the system **300** may comprise various other hardware components such as various interfaces **702,** memory **708,** and various modules or means as shown in **Fig. 7****.** The modules may comprise a processing module **714,** a prediction module **716,** a feedback module **718,** and various other modules/units **720.** The other modules/units **720** may comprise a display etc. In an embodiment, the modules **714-720** may be dedicated hardware, software or combination thereof, capable of executing one or more instructions stored in the memory **708** for performing various operations of the computing system. In another embodiment, the modules **714-720** may be software modules stored in the memory **708** which may be executed by the at least one processor for performing the operations of the computing system **300.**

The interfaces **702** may include a variety of software and hardware interfaces, for example, a web interface, a graphical user interface, an input device-output device (I/O) interface **706,** a network interface **704** and the like. The I/O interfaces **706** may allow the computing system 300 to interact with other computing systems directly or through other devices. The network interface **704** may allow the system **300** to interact with one or more testing units **310** either directly or via a network.

The memory **508** may comprise test data records **510,** and other various types of data **512** such as one or more instructions executable the modules **714-720.**

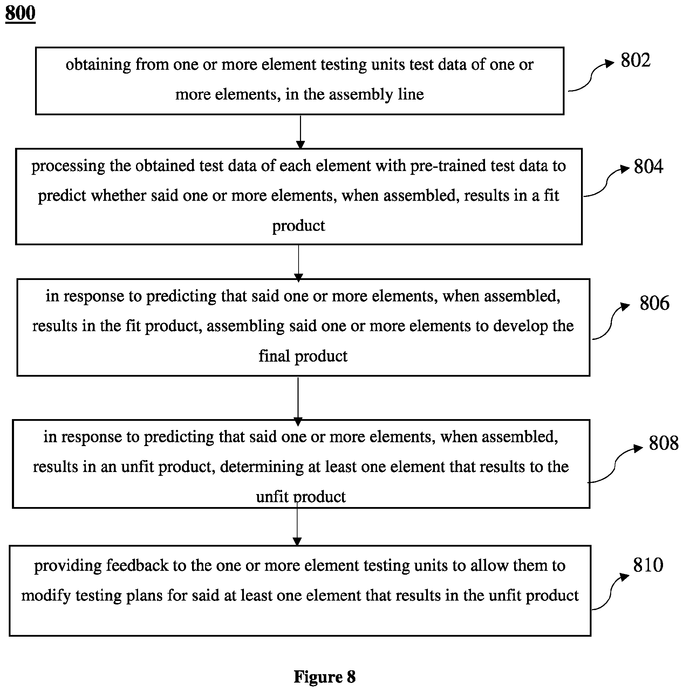

Referring now to **fig. 8****,** a flowchart is described illustrating an exemplary method **800** providing predictive and preventive analysis relating to fitness of elements in an assembly line prior to final product assembling, according to an embodiment of the present disclosure. The method **800** is merely provided for exemplary purposes, and embodiments are intended to include or otherwise cover any methods or procedures for providing predictive and preventive analysis relating to fitness of elements in an assembly line, prior to final product assembling.

The method **800** may include, at block **802,** obtaining from one or more element testing units test data of one or more elements, in the assembly line. The test data corresponds to electrical parameters representing functionality of the one or more elements under different test conditions. According to an embodiment, the test data corresponds to electrical/electromagnetic parameters representing functionality of the one or more elements under different test conditions. The obtained test data is stored in the memory unit **304** for further processing by the system **300.**

At block **804,** the method **800** may include processing the obtained test data of each element with pre-trained test data to predict whether said one or more elements, when assembled, results in a fit product. The processing includes comparing the obtained test data of each of the one or more elements with a pre-defined threshold value stored in a database. The operations of block **804** may be performed by the prediction unit 306 of Figure 3 or by the modules of Figure 7. According to an embodiment, the prediction unit **306** may process the test data of each element with pre-trained test data to predict whether said one or more elements, when assembled would result in a fit product. The prediction unit **306** processes the test data by comparing the test data of each of the one or more elements with a pre-defined threshold value stored in a database in the memory unit **304.** According to an embodiment, the prediction unit **306** comprises a prediction model generated using machine learning algorithms trained on large volume of historical test data that comprises fit, unfit elements test data, and various auxiliary data retrieved from one or more element test units and product test units of different assembly line, over a period of time. During the model training, based on the patterns present in test data i.e., parameter value which leads to pass/failure of final product, the model aligns the threshold value in such a way that it performs well on the training data fed to the model. An optimization technique is used to optimize the alignment of the threshold value internally to better perform the prediction. Once the training is complemented, the trained system can predict the fitness of any product based on new un-seen test data using the calculated threshold. According to an embodiment, the prediction model may be automatically trained on regular intervals based on real-time test data and may dynamically adjust the threshold value based on the real-time test data.

At block **806,** the method **800** may include assembling said one or more elements to develop the final product in response to predicting that said one or more elements, when assembled results in the fit product. The processing unit **302** may pass the one or more elements to further develop the final product. The final product may be developed, using the elements which are predicted to be fit, by any suitable product assembling unit (not shown in figure).

At block **808,** the method **800** may include determining at least one element that results to the unfit product in response to predicting that said one or more elements, when assembled, results in an unfit product. The operations of block **808** may be performed by the feedback unit **308** of Figure 3 or by the modules of Figure 7. The feedback unit **308** make use of the prediction model that defines a decision tree-based structure to determine at least one element that causes the final product to be unfit.

At block **810,** the method **800** may include providing feedback to the one or more element testing units to allow them to modify testing plans for said at least one element that results in the unfit product. The operations of block **810** may be performed by the feedback unit **308** of Figure 3 or by the modules of Figure 7. The feedback unit **308** uses Local Interpretable Model-agnostic Explanations (LIME) module on top of decision tree-based structure. The LIME module determines which parameter(s) changes will have most impact on the prediction of the fitness of the final product.

According to an embodiment of the present disclosure, the feedback unit **308** analyses the test data for each element to determine the problematic element and corresponding parameter(s) which leads to failure of final product. In order to determine the responsible problematic parameter(s), the decision path is traversed from the root node to the terminal node of the plurality of terminal nodes based on the test data of the element. Further, it is determined whether the element results to the unfit product based on the threshold value of the nodes of the traversed decision path. While traversing the decision path, when the test data does not satisfy the threshold criteria associated with the last non-terminal node connected to the terminal node of the decision path, inputs are provided as the feedback for test plan modification relevant to the one or more electrical parameters corresponding to all nodes in the traversed decision path.

According to an embodiment of the present disclosure, the feedback unit **308** may monitor the responsible test parameters of elements which causes the failure of final product and may provide feedback along with the percentage of total cases where the corresponding parameter led to failure of the final product. The feedback unit **308** may highlight the test parameters which has major contribution in the product failure.

The disclosed techniques of provide prediction of non-reliable products well before final assembly provides considerable savings in terms of manufacturing cost and time. It provides explain ability and confidence scores for the not reliable products for the final assembly. It also provides the opportunity to validate the already existing test plan to assure the steady final product yield. The ability to predict the final product yield performance on semi-finished material in the manufacturing pipeline gives reliable information for engineers to investigate possible contributing factors in the upstream process steps for remedial actions.

The above method **800** may be described in the general context of computer executable instructions. Generally, computer executable instructions can include routines, programs, objects, components, data structures, procedures, modules, and functions, which perform specific functions or implement specific abstract data types.

The order in which the various operations of the methods are described is not intended to be construed as a limitation, and any number of the described method blocks can be combined in any order to implement the method. Additionally, individual blocks may be deleted from the methods without departing from the spirit and scope of the subject matter described herein. Furthermore, the methods can be implemented in any suitable hardware, software, firmware, or combination thereof.

The various operations of methods described above may be performed by any suitable means capable of performing the corresponding functions. The means may include various hardware and/or software component(s) and/or module(s), including, but not limited to the units 302-308 defined in **Figure 3** and the various modules of **Figure 7****.** Generally, where there are operations illustrated in Figures, those operations may have corresponding counterpart means-plus-function components.

It may be noted here that the subject matter of some or all embodiments described with reference to **Figures 1-7** may be relevant for the method and the same is not repeated for the sake of brevity.

In a non-limiting embodiment of the present disclosure, one or more non-transitory computer-readable media may be utilized for implementing the embodiments consistent with the present disclosure. Certain aspects may comprise a computer program product for performing the operations presented herein. For example, such a computer program product may comprise a computer readable media having instructions stored (and/or encoded) thereon, the instructions being executable by one or more processors to perform the operations described herein. For certain aspects, the computer program product may include packaging material.

Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

The terms "including", "comprising", "having" and variations thereof mean "including but not limited to", unless expressly specified otherwise.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the appended claims.

## Claims

1. A method for providing predictive and preventive analysis relating to fitness of elements in an assembly line, prior to final product assembling, the method comprising:
obtaining from one or more element testing units test data of one or more elements, in the assembly line, wherein the test data corresponds to electrical parameters representing functionality of the one or more elements under different test conditions;
processing the obtained test data of each element with pre-trained test data to predict whether said one or more elements, when assembled, results in a fit product, wherein said processing includes comparing the obtained test data of each of the one or more elements with a pre-defined threshold value, stored in a database;
in response to predicting that said one or more elements, when assembled, results in the fit product, assembling said one or more elements to develop the final product;
in response to predicting that said one or more elements, when assembled, results in an unfit product, determining at least one element that results to the unfit product; and
providing feedback to the one or more element testing units to allow them to modify testing plans for said at least one element that results in the unfit product.

2. The method of claim 1, wherein said processing is performed using a pre-trained prediction model,
wherein providing the feedback comprises identifying one or more electrical parameters, of the at least one element, responsible for the unfit product and recommending test plan modification relevant to the one or more electrical parameters using the prediction model,
wherein the prediction model defines a decision tree based structure elaborating the electrical parameters, having one root node and a plurality of terminal nodes, wherein each terminal node is connected to the root node through a decision path, wherein each decision path comprises at least one intermediate node in between the root node and the terminal node, wherein each intermediate node of the decision tree is connected with at least one terminal node via a decision path, and
wherein each node of the decision tree represents an electrical parameter and respective threshold value for determining whether the element results to the fit product or the unfit product.

3. The method of claim 2, further comprising:
for each element:
traversing a decision path from the root node to a terminal node of the plurality of terminal nodes based on the test data of the element;
determining whether the element results to the unfit product based on the threshold value of the nodes of the traversed decision path; and
providing inputs, as the feedback, for test plan modification relevant to the one or more electrical parameters corresponding to the nodes in the traversed decision path.

4. The method of claim 2, further comprising automatically training the prediction model on regular intervals based on real-time test data, wherein automatically training the prediction model comprises dynamically adjusting the pre-defined threshold value based on the real-time test data.

5. The method of claim 1, further comprising generating a confidence score for the determined at least one element that results to the unfit product.

6. A system to provide predictive and preventive analysis relating to fitness of elements in an assembly line, prior to final product assembling, the system comprises:
a processing unit configured to obtain from one or more element testing units test data of one or more elements, in the assembly line, wherein the test data corresponds to electrical parameters representing functionality of the one or more elements under different test conditions;
a memory unit operationally coupled with the processing unit and to store the obtained test data;
a prediction unit operationally coupled with the processing unit and the memory unit, and the prediction unit is configured to process the obtained test data of each element with pre-trained test data to predict whether said one or more elements, when assembled, results in a fit product, wherein said processing includes comparing the obtained test data of each of the one or more elements with a pre-defined threshold value, stored in a database;
wherein in response to predicting that said one or more elements, when assembled, results in the fit product, the processing unit is configured to assemble said one or more elements to develop the final product; and
a feedback unit operationally coupled with the processing unit, the prediction unit, and the memory unit, and the feedback unit is configured to:
in response to predicting that said one or more elements, when assembled, results in an unfit product, determine at least one element that results to the unfit product; and
provide feedback to the one or more element testing units to allow them to modify testing plans for said at least one element that results in the unfit product.

7. The system of claim 6, wherein said prediction unit comprises a pre-trained prediction model to process the obtained test data of each element with pre-trained test data to predict whether said one or more elements, when assembled, results in a fit product,
wherein the feedback unit is configured to provide the feedback by identifying one or more electrical parameters, of the at least one element, responsible for the unfit product and recommending test plan modification relevant to the one or more electrical parameters using the prediction model,
wherein the prediction model defines a decision tree based structure elaborating the electrical parameters, having one root node and a plurality of terminal nodes, wherein each terminal node is connected to the root node through a decision path, wherein each decision path comprises at least one intermediate node in between the root node and the terminal node, wherein each intermediate node of the decision tree is connected with at least one terminal node via a decision path, and
wherein each node of the decision tree represents an electrical parameter and respective threshold value for determining whether the element results to the fit product or the unfit product.

8. The system of claim 7, wherein the feedback unit is further configured to:
for each element:
traverse a decision path from the root node to a terminal node of the plurality of terminal nodes based on the test data of the element;
determine whether the element results to the unfit product based on the threshold value of the nodes of the traversed decision path; and
provide inputs, as the feedback, for test plan modification relevant to the one or more electrical parameters corresponding to the nodes in the traversed decision path.

9. The system of claim 7, wherein the prediction unit is further configured to automatically training the prediction model on regular intervals based on real-time test data, wherein automatically training the prediction model comprises dynamically adjusting the pre-defined threshold value based on the real-time test data.

10. The system of claim 6, further wherein the prediction unit is further configured to generate a confidence score for the determined at least one element that results to the unfit product.

11. A non-transitory computer readable media storing one or more instructions executable by at least one processor, the non-transitory computer readable media comprising:
one or more instructions for obtaining from one or more element testing units test data of one or more elements, in the assembly line, wherein the test data corresponds to electrical parameters representing functionality of the one or more elements under different test conditions;
one or more instructions for processing the obtained test data of each element with pre-trained test data to predict whether said one or more elements, when assembled, results in a fit product, wherein said processing includes comparing the obtained test data of each of the one or more elements with a pre-defined threshold value, stored in a database;
one or more instructions for assembling said one or more elements to develop the final product, in response to predicting that said one or more elements, when assembled, results in the fit product,;
one or more instructions for determining at least one element that results to the unfit product, in response to predicting that said one or more elements, when assembled, results in an unfit product; and
one or more instructions for providing feedback to the one or more element testing units to allow them to modify testing plans for said at least one element that results in the unfit product.

12. The non-transitory computer readable media of claim 11, wherein said processing is performed using one or more instructions stored in a pre-trained prediction model,
wherein providing the feedback comprises identifying one or more electrical parameters, of the at least one element, responsible for the unfit product and recommending test plan modification relevant to the one or more electrical parameters using the prediction model,
wherein the prediction model defines a decision tree based structure elaborating the electrical parameters, having one root node and a plurality of terminal nodes, wherein each terminal node is connected to the root node through a decision path, wherein each decision path comprises at least one intermediate node in between the root node and the terminal node, wherein each intermediate node of the decision tree is connected with at least one terminal node via a decision path, and
wherein each node of the decision tree represents an electrical parameter and respective threshold value for determining whether the element results to the fit product or the unfit product.

13. The non-transitory computer readable media of claim 11, further comprising one or more instructions for:
for each element:
traversing a decision path from the root node to a terminal node of the plurality of terminal nodes based on the test data of the element;
determining whether the element results to the unfit product based on the threshold value of the nodes of the traversed decision path; and
providing inputs, as the feedback, for test plan modification relevant to the one or more electrical parameters corresponding to the nodes in the traversed decision path.

14. The non-transitory computer readable media of claim 12, further comprising one or more instructions for automatically training the prediction model on regular intervals based on real-time test data, wherein automatically training the prediction model comprises dynamically adjusting the pre-defined threshold value based on the real-time test data.

15. The non-transitory computer readable media of claim 11, further comprising one or more instructions for generating a confidence score for the determined at least one element that results to the unfit product.
